# EUROPÄISCHE PATENTSCHRIFT

(11) **EP 1 948 955 B1**
(45) Veröffentlichungstag und Bekanntmachung des Hinweises auf die Patenterteilung: **14.10.2009**
(21) Anmeldenummer: 06818590.9
(22) Anmeldetag: 16.11.2006
(51) Int. Cl.: F16D 66/02

(54) **VERFAHREN ZUR MONTAGE EINES VERSCHLEISSANZEIGERS AN EINER BREMSE**
METHOD FOR THE ASSEMBLY OF A WEAR INDICATOR ON A BRAKE
PROCEDE DE MONTAGE D'UN INDICATEUR D'USURE SUR UN FREIN

(30) Priorität: 18.11.2005 DE 102005055536
(43) Veröffentlichungstag der Anmeldung: 30.07.2008
(73) Patentinhaber: Pex Kabeltechnik GmbH, 71083 Herrenberg-Gülstein (DE)
(72) Erfinder: KOHLER, Hartmut, 72285 Pfälzgrafenweiler (DE); SCHÖCK, Marco, 71272 Renningen (DE); KORECKI, Jörg, 71134 Aidlingen (DE)
(74) Vertreter: Weiss, Peter
(86) Internationale Anmeldenummer: PCT/EP2006/011002
(87) Internationale Veröffentlichungsnummer: WO 2007/057184

(56) Entgegenhaltungen:
- DE-A1- 3 230 266
- FR-A1- 2 266 056
- US-A1- 5 839 545
- US-A1- 2002 014 959

## Beschreibung

Die Erfindung betrifft ein Verfahren zur Montage eines Verschleissanzeigers an einer Bremse, insbesondere an einer Trommelbremse, sowie eine entsprechende Bremse.

### Stand der Technik

Derartige Bremsen sowie Verschleissanzeiger sind in vielfältiger Form und Ausgestaltung bekannt und gebräuchlich. So wird beispielsweise in der DE 103 56 801 eine Scheibenbremse und eine Überwachungseinrichtung für eine solche Scheibenbremse, insbesondere für deren Verschleiss beschrieben. Hierbei weist die Überwachungseinrichtung ein bezüglich eines Bremssattels verschiebliches Messelement auf, dass sich an einer der Bremsscheibe abgewandten Stirnfläche eines, Druckspindel abstützt, welche gegen einen Bremsbelag drückt. Das Messelement misst die Relativlage der Druckspindel zu dem Bremsbelag und kann so Verschleisserscheinungen feststellen.

Nachteilig hierbei ist jedoch, dass dieses Überwachungseinrichtung einen umständlichen Aufbau aufweist, weicher die Handhabung der Überwachungseinrichtung und auch den Austausch einzelner Bestandteile erschwert. So muss der Kontakt zwischen Bremsbelag und Druckspindel sowie zwischen Druckspindel und Messelement konstant gewährleistet sein. Hat sich jedoch beispielsweise die Mutter, in welche die Druckspindel eingeschraubt ist, verkantet oder ist die Feder zum Vorspannen des Messelementes beschädigt, so kann die Überwachungseinrichtung die Erfassung des.Verschteisszustandes nicht mehr erfassen.

Aus der US 2002/014959 A1 ist eine Signaleinrichtung für eine Bremse gemäß dem Oberbegriff des Anspruchs 2 bekannt, die in einen Holraum eines Nietschaftes, wie er für einen Belagniet vorgesehen ist, eingesetzt wird. Sie, umfasst eine in Kunststoff eingebettete Drahtschlaufe.

In der US 5,839,545 A1 ist ein Verschleissanzeiger gezeigt, bei dem der Warnleiter durch Kanäle eines Sensorgehäuses und Teile von diesem Sensorgehäuse herumgeführt ist. Nach dem Einsetzen dieses Sensorgehäuses in eine Ausnehmung des Belagträgers, wird eine Gehäusekappe auf das Sensorgehäuse aufgeclipst.

Gemäss der DE 32 30 266 A1 wird von dem Warnleiter eine Schleife ausgebildet und axial mit einer metallischen Federklammer in die Haltebohrung des Belagträgerplatte eingeschoben, bis nach dem Einrasten von federnden Rastfüssen die sichere Einbaulage erreicht ist.

### Aufgabe

Aufgabe der vorliegenden Erfindung ist es, die Montage eines Verschleissanzeigers sowie dessen Handhabung wesentlich zu erleichtern. Gleichzeitig soll der Verschleissanzeiger wenig Raum einnehmen und eine genaue Erfassung des Verschleisszustandes der Bremse gewährleisten.

### Lösung der Aufgabe

Diese Aufgabe wird durch die Merkmale der Ansprüche 1 und 2 gelöst*.*

### Figurenbeschreibung

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine Draufsicht auf einen Verschleissanzeiger;
Figur 2 eine Seitenansicht eines erfindungsgemässen Isolierstücks;
Figur 3 eine weitere Seitenansicht des Isolierstücks gemäss Figur 2 um 90° gedreht;
Figur 4 eine Draufsicht auf das Isolierstück gemäss Figur 2;
Figur 5 eine Seitenansicht eines weiteren Ausführungsbeispiels eines Isolierstücks;
Figur 6 eine Draufsicht auf das Isolierstück gemäss Figur 5;
Figur 7 eine Draufsicht auf ein Teil einer Trommelbremse.

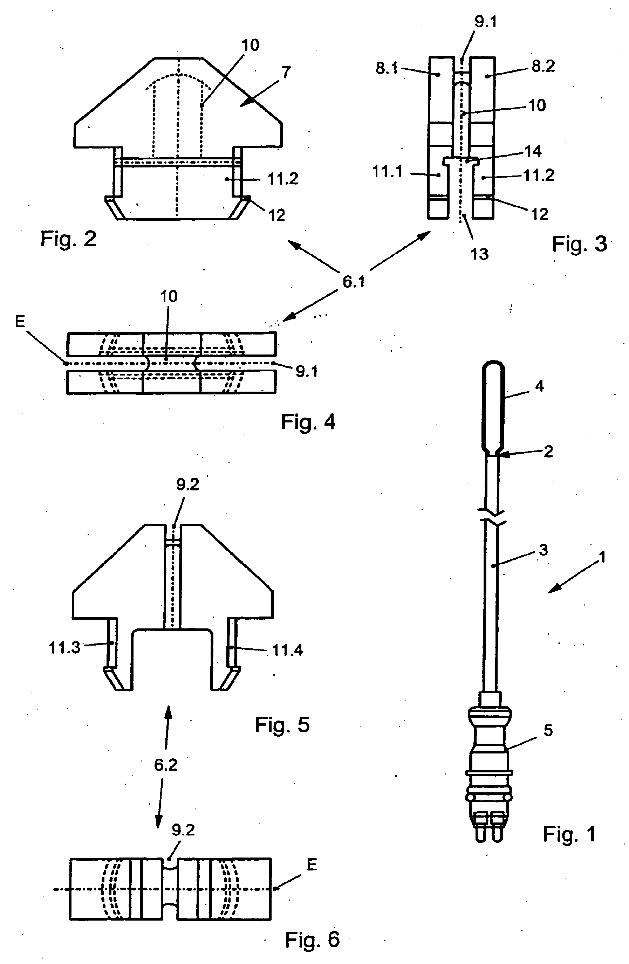

Ein Verschleissanzeiger 1 weist gemäss Figur 1 ein Warnleiter 2 auf, welches von einem Schlauch 3 umhüllt ist. Dieser Schlauch 3 reicht von einer Schlaufe 4, die durch den Warnleiter 2 gebildet wird, bis zu einem Stecker 5.

Die Schlaufe 4 dient der Aufnahme eines Isolierstücks 6.1, wie es in den Figuren 2 bis 4 gezeigt ist. Dieses Isolierstück 6.1 wird bevorzugt aus Kunststoff hergestellt. Es besitzt einen pfeilförmigen Grundkörper 7, der aus zwei pfeilartigen Plättchen 8.1 und 8.2 besteht, die zwischen sich eine umlaufende Nut 9.1 offenlassen, wobei die Nut 9.1 eine Mittelbrücke 10 zwischen den pfeilartigen Plättchen 8.1 und 8.2 umläuft.

Von dem Grundkörper 7 ragen nach unten zwei Clipsfüsschen 11.1 und 11.2 ab, weiche mit Rastnasen 12 versehen sind. Die Clipsfüsschen 11.1 und 11.2 bilden zwischen sich einen Schlitz 13 aus, dessen Schlitzgrund 14 verbreitert ist, so dass die Flexibilität der Clipsfüsschen 11.1 und 11.2 erhöht ist.

Die Funktionsweise der vorliegenden Erfindung ist folgende und wird im Zusammenhang mit Figur 2 näher beschrieben:

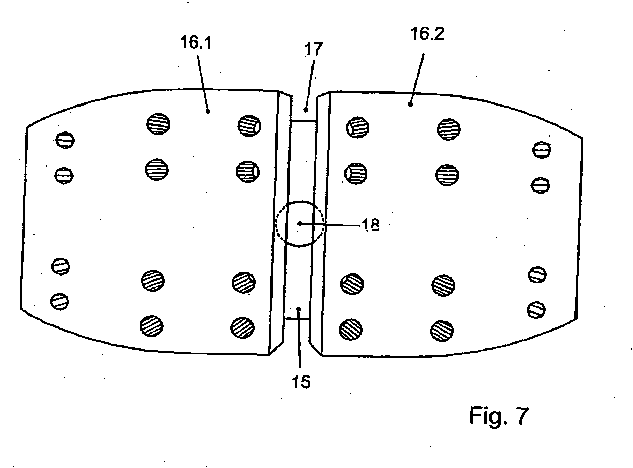

In Figur 7 ist von einer Bremse ein Belagträger 15 gezeigt, auf dem zwei Reibbeläge 16. 1 und 16.2 festliegen. Zwischen den beiden Reibbelägen 16.1 und 16. 2 ist ein Spalt 17 ausgebildet, in welcher der Belagträger 15 erkennbar ist. In diesem Spalt 17 ist der Belagträger 15 mit einer Ausnehmung, 18 versehen.

Zur Montage des Verschleissanzeigers 1 wird die Schlaufe 4 von hinten her durch die Ausnehmung 18 des Belagträgers 15 hindurchgesteckt, der Schlauch 3 zurückgeschoben und etwas gestaucht.

Nunmehr wird in die Schlaufe 4 das Isolierstück 6.1 eingehängt, indem die Schlaufe 4 in die Nut 9.1 gehängt wird. Wird jetzt der Verschleissanzeiger 1 losgelassen, so drückt der Schlauch 3 gegen das Isolierstück 15 und zieht die Schlaufe 4 in die Nut 9.1. Auf diese Weise wird die Schlaufe 4 in Position gehalten. Danach wird das Isolierstück 6.1 in die Ausnehmung 18 eingeclipst, wobei die Clipsfüsschen 11.1 und 11.2 kurzfristig nachgeben, so dass die Rastnasen 12 eine Randkante der Ausnehmung 18 hinterschnappen können.

Die Höhe des Grundkörpers 7 ist so gewählt, dass bei einem Verschleiss der Reibbeläge 16.1 bzw. 16.2 bis auf ein vorbestimmtes Mass anschliessend ein Abrieb der oberen Spitze des Grundkörpers 7 und danach ein Abrieb des Warnteiters 2 erfolgt, bis der Warnleiter 2 unterbrochen ist, wodurch der Verschleiss der Reibbeläge 16. 1 und 16.2 angezeigt wird.

Das Isolierstück 6.2 gemäss den Figuren 5 und 6 unterscheidet stich von demjenigen nach den Figuren 2 bis 4 dadurch, dass eine Nut 9.2 nicht in einer ebene E des Isolierstücks verläuft, sondern quer dazu. Desgleichen sind auch die Clipsfüsschen 11.3 und 11.4 quer zu der Ebene E angeordnet und voneinander beabstandet. Die Funktionsweise ist aber die gleiche, wie diejenige des Isolierstücks 6.1.

**Bezugszeichenliste**

| | | | | | |
|---|---|---|---|---|---|
| 1 | Verschleissanzeiger | 34 | | 67 | |
| 2 | Warnleiter | 35 | | 68 | |
| 3 | Schlauch | 36 | | 69 | |
| 4 | Schlaufe | 37 | | 70 | |
| 5 | Stecker | 38 | | 71 | |
| 6 | Isolierstück | 39 | | 72 | |
| 7 | Grundkörper | 40 | | 73 | |
| 8 | pfeilartige Plättchen | 41 | | 74 | |
| 9 | Nut | 42 | | 75 | |
| 10 | Mittelbrücke | 43 | | 76 | |
| 11 | Clipsfüsschen | 44 | | 77 | |
| 12 | Rastnase | 45 | | 78 | |
| 13 | Schlitz. | 46 | | 79 | |
| 14 | Schlitzgrund | 47 | | | |
| 15 | Belagträger | 48 | | | |
| 16 | Reibbelag | 49 | | E | Ebene |
| 17 | Spalt | 50 | | | |
| 18 | Ausnehmung | 51 | | | |
| 19 | | 52 | | | |
| 20 | | 53 | | | |
| 21 | | 54 | | | |
| 22 | | 55 | | | |
| 23 | | 56 | | | |
| 24 | | 57 | | | |
| 25 | | 58 | | | |
| 26 | | 59 | | | |
| 27 | | 60 | | | |
| 28 | | 61 | | | |
| 29 | | 62 | | | |
| 30 | | 63 | | | |
| 31 | | 64 | | | |
| 32 | | 65 | | | |
| 33 | | 66 | | | |

## Patentansprüche

1. Verfahren zur Montage eines Verschleissanzeigers (1) an einer Bremse, insbesondere an einer Trommelbremse, wobei bei einem von einem Schlauch (3) umfangenen Warnleiter (2) des Verschleissanzeigers (1) eine Schlaufe (4) gebildet und diese durch eine Ausnehmung (18) in einem Belagträger (15) nahe an einem Reibbelag (16.1, 16.2) oder zwischen zwei Reibbelägen gesteckt, sodann ein Isolierstück (6.1, 6.2) in die Schlaufe (4) so eingehängt wird, dass es sich gegen den Schlauch (3) abstützt und so die Schlaufe (4) auf dem Isolierstück (6.1, 6.2) verspannt, und das Isolierstück (6.1, 6.2) in die Ausnehmung (18) eingesetzt, insbesondere eingeclipst wird.

2. Bremse, insbesondere Trommelbremse für ein Fahrzeug, mit zumindest einem Reibbelag (16.1, 16.2) auf einem Belagträger (15), wobei dem Reibbelag (16.1, 16.2) ein Verschleissanzeiger (1) mit einem Warnleiter (2) zugeordnet ist und der Warnleiter (2) in einer Schlaufe (4) um eine Halterung herumgeführt und diese in eine Ausnehmung (18) in dem Belagträger (15) neben dem Reibbelag (16.1, 16.2) eingeclipst ist, **dadurch gekennzeichnet, dass** auf den Warnleiter (2) ein gegen die Halterung drückender flexibler Schlauch (3) aufgeschoben ist und die Halterung als Isolierstück (6.1, 6.2) ausgebildet ist.

3. Bremse nach Anspruch 2, **dadurch gekennzeichnet, dass** sich die Ausnehmung (18) in einem Spalt (17) zwischen zwei Reibbelägen (16.1, 16.2) befindet.

4. Bremse nach Anspruch 2 oder 3, **dadurch gekennzeichnet, dass** das Isolierstück (6.1, 6.2) eine Nut (9.1, 9.2) zur Aufnahme der Schlaufe (4) aufweist und die Nut (9.1, 9.2) in einer Ebene (E) oder quer zu einer Ebene (E) des Isolierstücks (6.1) um dieses herum verläuft.

5. Bremse nach wenigstens einem der Ansprüche 2 bis 4, **dadurch gekennzeichnet, dass** das Isolierstück (6.1, 6.2) einen pfeilförmigen, von dem Belagträger (15) aufragenden Grundkörper (7) aufweist, von dem flexible Clipsfüsschen (11.1 bis 11.4) abragen.

## Claims

1. Method for the assembly of a wear indicator (1) on a brake, in particular on a drum brake, wherein in a warning conductor (2) of the wear indicator (1) that is sheathed in a tube (3) a loop (4) is formed and passed through a recess (18) in a lining carrier (15) close to a friction lining (16.1, 16.2) or between two friction linings, then an insulating piece (6.1, 6.2) is fitted into the loop (4) in such a way that it is supported against the tube (3) and hence braces the loop (4) on the insulating piece (6.1, 6.2), and the insulating piece (6.1, 6.2) is inserted, in particular clipped into the recess (18).

2. Brake, in particular a drum brake for a vehicle, having at least one friction lining (16.1, 16.2) on a lining carrier (15), wherein a wear indicator (1) having a warning conductor (2) is associated with the friction lining (16.1, 16.2) and the warning conductor (2) is passed in a loop (4) about a mounting, which is clipped into a recess (18) in the lining carrier (15) next to the friction lining (16.1, 16.2), **characterized in that** there is slipped onto the warning conductor (2) a flexible tube (3), which presses against the mounting, and the mounting takes the form of an insulating piece (6.1, 6.2).

3. Brake according to claim 2, **characterized in that** the recess (18) is situated in a gap (17) between two friction linings (16.1, 16.2).

4. Brake according to claim 2 or 3, **characterized in that** the insulating piece (6.1, 6.2) has a groove (9.1, 9.2) for receiving the loop (4) and the groove (9.1, 9.2) extends around the insulating piece (6.1) in a plane (E) or transversely of a plane (E) of the insulating piece (6.1).

5. Brake according to at least one of claims 2 to 4, **characterized in that** the insulating piece (6.1, 6.2) comprises an arrow-shaped basic body (7), which projects up from the lining carrier (15) and from which small flexible clip feet (11.1, 11.2) downwardly project.

## Revendications

1. Procédé de montage d'un indicateur d'usure (1) sur un frein, en particulier sur un frein à tambour, dans lequel dans un conducteur de chaleur (2), entouré d'un flexible (3), de l'indicateur d'usure (1) est formée une boucle (4) et celle-ci est passée à travers un évidement (18) dans un porte-revêtement (15) près d'un revêtement de friction (16.1, 16.2) ou entre deux revêtements de friction, une pièce d'isolation (6.1, 6.2) est ensuite suspendue dans la boucle (4) de sorte qu'elle s'appuie contre le flexible (3) et tende ainsi la boucle (4) sur la pièce d'isolation (6.1, 6.2), et la pièce d'isolation (6.1, 6.2) est placée, en particulier clipée, dans l'évidement (18).

2. Frein, en particulier frein à tambour pour un véhicule, avec au moins un revêtement de friction (16.1, 16.2) sur un porte-revêtement (15), au revêtement de friction (16.1, 16.2) étant associé un indicateur d'usure (1) avec un conducteur de chaleur (2) et le conducteur de chaleur (2) étant guidé dans une boucle (4) autour d'un support et ce dernier étant clipé dans un évidement (18) dans le porte-revêtement (15) à côté du revêtement de friction (16.1, 16.2), **caractérisé par le fait que** sur le conducteur de chaleur (2) est enfoncé un tube flexible (3) appuyant contre le support et que le support est réalisé sous forme de pièce d'isolation (6.1, 6.2).

3. Frein selon la revendication 2, **caractérisé par le fait que** l'évidement (18) se trouve dans un interstice (17) entre deux revêtements de friction (16.1, 16.2).

4. Frein selon la revendication 2 ou 3, **caractérisé par le fait que** la pièce d'isolation (6.1, 6.2) présente une rainure (9.1, 9.2) destinée à recevoir la boucle (4) et que la rainure (9.1, 9.2) s'étend dans un plan (E) ou transversalement à un plan (E) de la pièce d'isolation (6.1) autour de cette dernière.

5. Frein selon au moins l'une des revendications 2 à 4, **caractérisé par le fait que** la pièce d'isolation (6.1, 6.2) présente un corps de base (7) en forme de flèche s'élevant à partir du porte-revêtement (15), duquel ressortent des pattes de clipage flexibles (11.1 bis 11.4).
